# FASCICULE DE BREVET EUROPEEN

(11) **EP 3 675 463 B1**
(45) Date de publication et mention de la délivrance du brevet: **06.12.2023**
(21) Numéro de dépôt: 19220142.4
(22) Date de dépôt: 30.12.2019
(51) Int. Cl.: H04L 67/51

(54) **PROCÉDÉ D'IDENTIFICATION D'UN OBJET CONNECTÉ DANS UNE INFRASTRUCTURE RÉSEAU**
IDENTIFIZIERUNGSVERFAHREN EINES VERBUNDENEN OBJEKTS IN EINER NETZINFRASTRUKTUR
METHOD FOR IDENTIFYING A CONNECTED OBJECT IN A NETWORK INFRASTRUCTURE

(30) Priorité: 31.12.2018 EP 18306906; 06.05.2019 FR 1904719
(43) Date de publication de la demande: 01.07.2020
(73) Titulaire: Bull SAS, 78340 Les Clayes-sous-Bois (FR)
(72) Inventeur: DEMEILLIEZ, Bruno, 38380 Saint Laurent du Pont (FR); MENIGOT, Gilles, 38190 Froges (FR); CHAABANE, Wajih, 73000 Chambery (FR)
(74) Mandataire: IPAZ

(56) Documents cités:
- US-A1- 2016 036 764
- US-B1- 9 705 747
- TANGANELLI GIACOMO ET AL: "Edge-Centric Distributed Discovery and Access in the Internet of Things", IEEE INTERNET OF THINGS JOURNAL, IEEE, USA, vol. 5, no. 1, 1 février 2018 (2018-02-01) , pages 425-438, XP011677147, DOI: 10.1109/JIOT.2017.2767381

## Description

La présente invention concerne le domaine des objets connectés et, notamment, l'échange de données dans une infrastructure réseau comprenant des objets connectés. Elle concerne en particulier un procédé d'identification d'un objet connecté dans une infrastructure réseau qui comporte au moins deux réseaux d'objets connectés interconnectés par l'intermédiaire d'un réseau de transport de données.

### [Art antérieur]

L'internet des Objets (IdO), ou Internet of Things (loT) désigne l'ensemble des objets connectés à internet et est un domaine des Technologies de l'information et de la Communication (ou TIC) en pleine expansion. En effet, l'IoT trouve des applications dans des domaines de plus en plus variés tels que, par exemple : la ville intelligente, les voitures autonomes, la domotique ou encore la gestion intelligente de la maison.

Les dispositifs électroniques concernés par ces applications sont appelés des objets connectés, dans le sens où ils interagissent au travers de sous-réseaux locaux qui peuvent être connectés à un réseau central à haut débit comme l'Internet. Plusieurs sous-réseaux locaux peuvent être intégrés à un même réseau d'objets connectés. Un tel réseau d'objets connectés, aussi appelé réseau local dans la suite, comprend alors plusieurs passerelles de connexion, propres à chaque sous-réseau, auxquelles sont respectivement connectés un ou plusieurs objets connectés. Chaque passerelle de connexion assure le routage de messages qui transitent, d'une part, entre les différents objets connectés du réseau local et, d'autre part, entre les objets connectés du réseau local et un réseau de transport de données (comme par exemple Internet).

En outre, plusieurs réseaux locaux peuvent être interconnectés, par l'intermédiaire d'un réseau de transport de données. Dans ce cas, les passerelles de connexion des réseaux locaux interconnectés sont connectées à des passerelles de connexion du réseau de transport de données. Des messages peuvent ainsi transiter entre des objets connectés de réseaux d'objets connectés distincts. Dit autrement, un message peut être émis par un objet connecté source d'un réseau d'objets connectés donné et transiter par plusieurs passerelles de connexion, dont au moins une passerelle de connexion d'un réseau de transport de données, jusqu'à un objet connecté destinataire d'un autre réseau d'objets connectés.

Dans une telle configuration, il est particulièrement utile pour un objet connecté déterminé d'avoir une connaissance précise des différents objets connectés de l'infrastructure réseau à laquelle il appartient et avec lesquels il peut échanger des messages. Cette connaissance suppose que l'objet connecté en question puisse obtenir régulièrement des informations actualisées sur tous les autres objets connectés avec lesquels il peut échanger des messages. En particulier, un objet connecté est d'autant plus capable d'échanger des messages de manière efficace et pertinente au sein d'une telle infrastructure réseau qu'il peut identifier les autres objets connectés avec lesquels il peut le faire et déterminer des caractéristiques liées à ces autres objets connectés. Par exemple, quel est le fabricant d'un autre objet connecté, quel est son domaine de fonctionnalité ou encore à quelle distance se situe-t-il dans l'infrastructure réseau. Ainsi chaque objet connecté, avant de devenir source d'un message, peut rechercher à qui et comment il peut transmettre un message.

Enfin, outre le fait que chaque sous-réseau peut s'appuyer sur une technologie qui lui est propre pour sa connectivité à l'internet (par exemple avec une Box ADSL, une BOX 4G, une connexion WiMax, une connexion Satellite, un téléphone portable...), chaque passerelle de connexion utilise potentiellement une ou plusieurs interfaces de communication différentes. Typiquement, les passerelles de connexion d'un réseau d'objets connectés peuvent utiliser des interfaces Ethernet, des interfaces WIFI, des interfaces Bluetooth, des interfaces RF433 ou encore des interfaces IrDA. Ainsi, un objet connecté doit pouvoir échanger des messages avec un autre objet connecté dans un infrastructure réseau qui relie entre elles des passerelles de connexion qui utilisent des interfaces de communications différentes. Dit autrement, chaque message échangé est susceptible de transiter par plusieurs des passerelles de connexion qui utilisent des interfaces de communications différentes.

La demande de brevet WO2007055689 divulgue notamment, un noeud source d'un réseau sans fil capable d'envoyer une requête (RREQ - Route Request) comprenant par exemple : l'adresse du noeud source, le numéro de séquence, l'adresse du noeud de destination et le numéro de séquence, l'identifiant RREQ, l'ID de message, la longueur du message, la durée de vie (TTL), le nombre de sauts, la métrique de routage, et un indicateur "Réponse intermédiaire" (IR). Le premier noeud intermédiaire avec une route valide vers le noeud de destination répond à la RREQ avec un message RREP (Route Réponse). Le message RREP est envoyé en unicast vers le noeud source et établit ainsi rapidement une route de transfert temporaire vers la destination. Le noeud intermédiaire transfère ensuite le message RREQ au noeud destinataire. Lorsque le noeud source reçoit le message RREP, il crée une route de transfert vers le noeud de destination. En outre, si le noeud de destination reçoit d'autres messages RREQ avec de meilleures métriques (meilleur itinéraire), le noeud de destination met à jour son itinéraire vers le noeud source avec le nouvel itinéraire. Le noeud source met alors à jour sa propre table de routage. Toutefois le système décrit dans ce document ne permet pas à un objet connecté d'identifier d'autres objets connecté avec lequel il peut échanger des messages.

Il est aussi connu du document US 2016/036764 un système pour attribuer à un loT son emplacement afin d'identifier sa localisation. Toutefois, dans ces systèmes il est question de renommer les loTs dans leur adresse (IP/MAC) en y ajoutant leur emplacement (coordonnées 3D) et de raisonner en emplacement. Aussi, ces loTs ne communiquent pas entre eux et un loT particulier ne peut pas échanger des messages de manière efficace et pertinente au sein d'une telle infrastructure réseau avec d'autre objets connectés qu'il peut identifier tout en déterminant des caractéristiques liées à ces autres objets connectés.

Il a également été développé des passerelles (Tanganelli giacomo et al. « Edge-centric distributed discovery and access in the Internet of Things", IEEE Internet of Things Journal, IEEE, USA, vol.5, n°1, 01/02/2018). Ces passerelles reposent sur une solution distribuée pour fédérer des passerelles déployées dans un Fog-Computing afin de permettre une découverte globale et un accès aux ressources des lots indépendamment de leur localisation. Néanmoins, ces passerelle nécessitent d'une part une architecture particulière et d'autre cette technologie ne se concentre que sur des ressources. Aussi, de telles passerelles ne permettent pas d'identifier des objets connectés spécifiques ni de centraliser des fonctionnalités et besoins des objets connectés.

D'autres moyens ont également été mis en oeuvre afin de s'adapter à des communications dans des réseaux hybrides (US9705747). Ces moyens permettent de déterminer à partir d'un paquet entrant, un dispositif de destination sur la base d'une adresse de destination. L'accent est mis sur la génération de carte de topologie réseau. Toutefois, ces moyens ne permettent pas une identification des objets connectées avec lesquels un objet connecté source peut échanger d'une part et permettre une centralisation des fonctionnalités et besoins des objets connectés d'autre part.

Il n'existe pas de moyens ou de méthode permettant à un objet connecté, quel qu'il soit, de connaître dans toute l'infrastructure réseau à laquelle il appartient, tous les objets connectés de façon par exemple à initier une coopération entre les objets connectés qui peuvent notamment être connectés au sein de réseaux de communication différents et fluctuants. Ainsi, il existe un besoin pour l'optimisation des échanges de données dans un réseau ou plusieurs réseaux d'objets connectés.

### [Problème technique]

L'invention a pour but de remédier aux inconvénients de l'art antérieur précités. En particulier, l'invention a pour but de proposer un procédé qui permet à un objet connecté de rechercher et d'identifier un ou plusieurs autres objets connectés sur la base de critères de recherche déterminés. En outre, le procédé s'applique à un objet connecté appartenant à une infrastructure réseau composée de plusieurs réseaux d'objets connectés interconnectés par l'intermédiaire d'un réseau de transport de données. Enfin, le procédé s'applique aussi dans une telle infrastructure réseau dans laquelle les différentes passerelles de connexion des différents réseaux utilisent des interfaces de communication différentes.

### [Brève description de l'invention]

L'invention est définie par les revendications indépendantes. Des modes de réalisation sont définis dans les revendications dépendantes.
**[****Fig. 1****]** est une représentation schématique d'un mode de réalisation d'un infrastructure réseau au sein de laquelle le procédé peut être mis en oeuvre ;
**[****Fig. 2****]** est un diagramme d'étapes d'un mode de mise en oeuvre du procédé ; et,
**[****Fig. 3****]** est un schéma fonctionnel d'un mode de réalisation d'une passerelle de connexion et d'un objet connecté selon l'invention.

### [Description de l'invention!

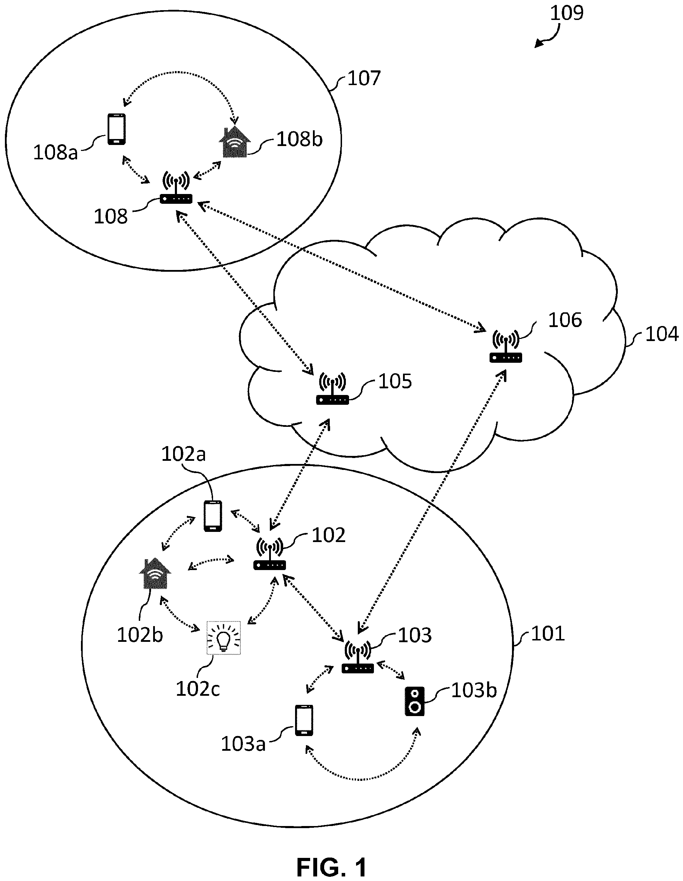

En référence au schéma de la **figure 1****,** il va tout d'abord être décrit un mode de réalisation d'une infrastructure réseau dans laquelle le procédé peut être mis en oeuvre.

Dans la suite de la description, un « objet connecté » est un objet électronique connecté, par une connexion filaire ou sans fil, à un réseau de transport de données, de manière que l'objet connecté peut partager des données avec un autre objet connecté, un serveur, un ordinateur fixe ou mobile, une tablette électronique, un smartphone ou tout autre dispositif connecté d'un réseau donné. De manière connue en soi, de tels objets connectés peuvent être, par exemple, des appareils domotiques, des dispositifs d'éclairage intelligents, des enceintes connectées ou encore des smartphones. En outre, dans la suite de la description on désigne par objet connecté « local » ou « source » un objet connecté qui est connecté à la passerelle de connexion qui exécute le procédé sans que la connexion n'utilise une passerelle de connexion intermédiaire. A contrario, on désigne par objet connecté « distant » un objet connecté qui est connecté à la passerelle de connexion qui exécute le procédé par l'intermédiaire d'au moins une autre passerelle de connexion.

On entend par « passerelle » ou « passerelle de connexion » au sens de l'invention un équipement assurant la connexion entre des équipements appartenant à des réseaux ou sous-réseaux locaux différents, par exemple assurant la connexion entre des équipements d'un réseau d'objets connectés (adresses IP locales) et des services internet (adresses IP publiques). De ce fait, une telle passerelle possède deux types d'adresses IP. Son adresse IP publique, attribuée par le FAI, lui permet d'échanger les données avec le réseau Internet. Son adresse IP locale lui permet d'échanger des données avec les équipements de son sous-réseau local. Elle est généralement spécifique et attribuée par défaut par le FAI.

L'expression « sous-réseau » ou « réseau local » au sens de l'invention correspond par exemple à des réseaux locaux servis chacun par au moins une passerelle de connexion à un autre réseau tel qu'Internet et auxquels sont connectés des objets connectés.

Au sens de l'invention « message » ou « message à transmettre » correspond à un message envoyé entre des objets connectés au travers d'au moins une passerelle ou entre objet connecté et passerelle ou encore entre passerelles et comprenant des données pouvant inclure des informations relatives à leur état et à celui de leur environnement. Le format de ces données peut par exemple correspondre à des fichiers, à des flux média (vidéo, son) ou encore à des valeurs codées.

Au sens de l'invention « requête » ou « message de requête » correspond à un message envoyé entre deux objets connectés au travers d'au moins une passerelle et comprenant des données d'un objet connecté. Un message de requête peut comporter en outre un identifiant de la passerelle de réception sélectionnée, des paramètres de messages et éventuellement une plage horaire pour la transmission d'un message de réponse.

Au sens de l'invention « message de réponse » correspond à un message envoyé par un objet connecté, de préférence destinataire, à destination d'un autre objet connecté, de préférence source en réponse à une requête ou un message de requête émis par l'objet connecté source. Un message de réponse peut être stocké ou enregistré sur un moyen de stockage.

Au sens de l'invention « message de maillage » correspond à un message envoyé par des passerelles en réponse à une requête. Un message de maillage comprend de préférence des informations comprises dans une liste de routage.

Au sens de l'invention « liste » correspond à une pluralité de donnée permettant d'indiquer une information spécifique notamment en lien avec un ou plusieurs objets connectés ou avec une ou plusieurs passerelles de connexion.

L'expression « protocoles de communication » au sens de l'invention correspond par exemple à des règles d'échanges de données entre différentes entités. Les protocoles de communication correspondent par exemple au wifi, réseau filaire, Bluetooth, Infra-rouge, Zigbee, LTE, 5G, et 3G.

On entend par « traiter », « calculer », « déterminer », « afficher », « extraire » « comparer » ou plus largement « opération exécutable », au sens de l'invention, une action effectuée par un dispositif ou un processeur sauf si le contexte indique autrement. À cet égard, les opérations se rapportent à des actions et/ou des processus d'un système de traitement de données, par exemple un système informatique ou un dispositif informatique électronique, qui manipule et transforme les données représentées en tant que quantités physiques (électroniques) dans les mémoires du système informatique ou d'autres dispositifs de stockage, de transmission ou d'affichage de l'information. Ces opérations peuvent se baser sur des applications ou des logiciels.

Les termes ou expressions « application », « logiciel », « code de programme », et « code exécutable » signifient toute expression, code ou notation, d'un ensemble d'instructions destinées à provoquer un traitement de données pour effectuer une fonction particulière directement ou indirectement (e.g. après une opération de conversion vers un autre code). Les exemples de code de programme peuvent inclure, sans s'y limiter, un sous-programme, une fonction, une application exécutable, un code source, un code objet, une bibliothèque et/ou tout autre séquence d'instructions conçues pour l'exécution sur un système informatique.

On entend par « processeur », au sens de l'invention, au moins un circuit matériel configuré pour exécuter des opérations selon des instructions contenues dans un code. Le circuit matériel peut être un circuit intégré. Des exemples d'un processeur comprennent, sans s'y limiter, une unité de traitement central, un processeur graphique, un circuit intégré spécifique à l'application (ASIC) et un circuit logique programmable. Un seul processeur ou plusieurs autres unités peuvent être utilisées pour mettre en oeuvre l'invention.

Par « sensiblement identique on entend au sens de l'invention une correspondance des critères de recherche et des informations de la liste de routage variant de moins de 30 % par rapport aux critères de recherche et aux informations comparés, de préférence de moins de 20 %, de façon encore plus préférée de moins de 10 %.

Dans l'exemple représenté à la figure 1, les réseaux d'objets connectés 101 et 107 permettent chacun de connecter les différents objets connectés qu'ils comprennent au réseau de transport de données 104, par exemple à l'Internet, par l'intermédiaire de leurs passerelles de connexion 102, 103 et 108, respectivement. En particulier, les passerelles de connexion 102, 103 et 108 sont adaptées pour établir une connexion avec une passerelle de connexion du réseau de transport de données 104. Cette connexion peut, par exemple, utiliser une technologie filaire, comme la technologie Ethernet, ou une technologie sans fil, comme la technologie 4G ou la technologie WiMax. Dans l'exemple représenté, les passerelles de connexion 102 et 108 établissent une liaison de communication avec la passerelle de connexion 105 alors que la passerelle de connexion 103 établit une liaison de communication avec la passerelle de connexion 106 du réseau de transport de données 104.

Chacune des trois passerelles de connexion 102, 103 et 108 est directement connectée à une pluralité d'objets connectés du réseau d'objets connectés auquel elle appartient. En particulier, la passerelle de connexion 102 est directement connectée avec les objets connectés 102a, 102b et 102c, la passerelle de connexion 103 est directement connectée avec les objets connectés 103a et 103b et la passerelle de connexion 108 est directement connectée avec les objets connectés 108a et 108b. Par l'expression « directement connectée » on désigne une connexion d'un objet connecté à la passerelle de connexion qui ne passe par aucune entité intermédiaire quelle qu'elle soit.

En outre, l'homme du métier appréciera que les différents objets connectés qui sont directement connectés à une passerelle de connexion sont, de fait, également connectés entre eux via ladite passerelle de connexion. Enfin, chaque objet connecté est susceptible d'établir d'autres connexions, c'est-à-dire d'autres liaisons de communication, avec d'autres objets connectés qui ne sont pas directement connectés à la même passerelle de connexion. Dit autrement, un objet connecté peut alors être connecté à une passerelle de connexion sans être directement connecté à ladite passerelle. En effet, dans ce cas, il est connecté par l'intermédiaire de sa liaison de communication, lequel est quant à lui directement connecté à ladite passerelle de connexion.

De manière générale, dans des réseaux d'objets connectés, chaque passerelle de connexion utilise une ou plusieurs interfaces de communication qui lui sont propres pour communiquer avec les objets connectés qui lui sont directement connectés. Il peut, par exemple, s'agir d'une interface Ethernet, d'une interface WIFI, d'une interface Bluetooth, d'une interface RF433 ou encore d'une interface IrDA. L'homme du métier appréciera que les modes de réalisation d'une passerelle de connexion dans laquelle l'invention peut être mise en oeuvre ne sont limités ni par le nombre ni par le type ou la nature des interfaces de connexion qui sont supportées. Dans tous les cas, un avantage du procédé selon des modes de mise en oeuvre repose notamment sur le fait que ledit procédé s'applique dans des réseaux interconnectés d'objets connectés qui peuvent comprendre plusieurs passerelles de connexions qui utilisent différentes interfaces de communication.

En résumé, les passerelles de connexion 102 ,103 et 108 des réseaux d'objets connectés 101 et 107 assurent le routage de données, et en particulier de messages, entre les différents objets connectés de l'infrastructure réseau 109 formée par les deux réseaux d'objets connectés 101 et 107 qui sont interconnectés par l'intermédiaire du réseau de transport de données 104. En outre, ces passerelles de connexion sont aussi adaptées pour assurer le routage de messages, par leur intermédiaire, d'un objet connecté source qui leur est connecté, directement ou non, à un objet connecté destinataire qui est connecté à une autre passerelle de connexion de l'infrastructure réseau 109. Ainsi, dans l'exemple présenté à la figure 1, la passerelle de connexion 102 assure le routage des messages échangés avec le réseau de transport de données 104 et, le cas échéant, avec un objet connecté qui est connecté à la passerelle de connexion 103 ou à la passerelle de connexion 108.

L'homme du métier appréciera que l'exemple décrit en référence à la figure 1 n'est pas limitatif. En particulier, des mises en oeuvre du procédé peuvent s'appliquer à une infrastructure réseau formée d'un nombre de réseau d'objets connectés supérieur à deux et d'un nombre de réseaux de transport de données supérieur à 1. En outre, chaque passerelle de connexion peut être connectée, directement ou indirectement, avec un ou plusieurs objets connectés sans limite de nombre de passerelles de connexion par l'intermédiaire desquelles des messages peuvent être transmis jusqu'à un objet connecté destinataire au sein du même réseau d'objets connectés ou d'un autre réseau d'objets connectés.

Le procédé selon l'invention à pour objet l'identification, par un objet connecté source, d'objets connectés particulier au sein de l'infrastructure réseau. Dit autrement, le procédé permet à un objet connecté source quel qu'il soit, de connaître dans toute l'infrastructure réseau à laquelle il appartient, tous les objets connectés qui répondent à des critères de recherche spécifiques. Pour rappel, on entend par objet connecté source, un objet connecté qui envoie ou va envoyer un message à un autre objet connecté de l'infrastructure réseau, appelé objet connecté destinataire.

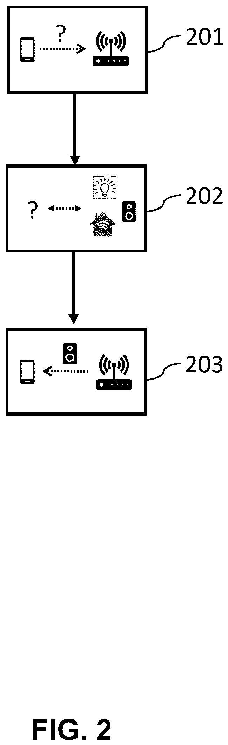

En référence à la **figure 2****,** il va maintenant être décrit un diagramme d'étapes d'un mode de mise en oeuvre du procédé. Les étapes du procédé sont exécutées par une passerelle de connexion d'un réseau d'objet connecté d'une infrastructure réseau telle que celle qui a été décrite en référence à la figure 1. L'homme du métier appréciera que le procédé peut s'exécuter dès lors qu'un objet connecté émet, à destination d'une passerelle de connexion, une requête qui comprend des critères de recherche. Chaque objet connecté est ainsi en mesure d'initier l'exécution des étapes du procédé par une passerelle de connexion pour mettre à jour régulièrement sa connaissance des autres éléments de l'infrastructure réseau à laquelle il appartient.

Ainsi, lors d'une première étape 201, la passerelle de connexion reçoit une requête en provenance d'un objet connecté source de l'infrastructure réseau. Cette requête comprend des critères de recherche déterminés. Pour rappel, l'objet connecté émetteur de la requête est appelé objet connecté source dans le sens où il peut et/ou il va transmettre un message, par l'intermédiaire d'une ou de plusieurs passerelles de connexion de l'infrastructure réseau, à un autre objet connecté.

Les critères de recherche peuvent être, par exemple et de manière non-limitative, un identifiant universel unique, UUID, d'un objet connecté, un domaine fonctionnel d'un objet connecté, un fabricant d'un objet connecté ou encore une distance maximale ciblée, dans l'infrastructure réseau, par rapport à l'objet connecté source. Typiquement, ces critères de recherche permettent à l'objet connecté source d'identifier par la suite, d'autres objets connectés avec lesquels il peut échanger des messages. Par exemple, parce qu'il y a une compatibilité du ou des fabricants des objets connectés impliqués ou parce qu'ils sont à une distance, dans l'infrastructure réseau, qui rend possible cet échange de messages. Pour rappel, de façon connue en soi par l'homme du métier, un UUID est un identifiant unique attribué à un objet connecté qui est généré par le fabriquant dudit objet connecté.

L'étape 202 consiste, quant à elle, à analyser la correspondance des critères de recherche de la requête avec des informations comprises dans une liste de routage de la passerelle de connexion. Par « correspondance » on entend le fait que certains paramètres des critères de recherche et de la liste de routage soient sensiblement identiques ou suffisamment proche dans la limite de différences prédéterminées.

En outre, les informations comprises dans la liste de routage d'une passerelle de connexion peuvent être, par exemple, une ou plusieurs des informations suivantes :
- des identifiants universels uniques, UUID, d'objets connectés locaux ou distants, auxquels la passerelle de connexion peut transmettre des messages ;
- des domaines fonctionnels respectifs, d'objets connectés locaux ou distants, auxquels la passerelle de connexion peut transmettre des messages ;
- des fabricants respectifs, d'objets connectés locaux ou distants, auxquels la passerelle de connexion peut transmettre des messages ; et,
- des distances respectives, dans l'infrastructure réseau, séparant la passerelle de connexion d'objets connectés locaux ou distants, auxquels ladite passerelle de connexion peut transmettre des messages.

Ces informations sont des exemples non-limitatifs d'informations comprises dans une liste de routage. Une telle liste peut en outre comprendre d'autres informations relatives aux interfaces de communication qu'utilise la passerelle de connexion concernée pour ces différentes connexions avec des objets connectés.

Finalement, la correspondance peut signifier, par exemple, le fait de retrouver à l'identique, dans la liste de routage, un identifiant universel unique d'un objet connecté compris dans les critères de recherche de la requête reçue par la passerelle de connexion.

En outre, dans un mode de mise en oeuvre particulier du procédé, l'analyse de la correspondance établit qu'il y a effectivement une correspondance des critères de recherche avec des informations de la liste de routage si :
- un identifiant universel unique, UUID, d'un objet connecté compris dans les critères de recherche est identique à un identifiant universel unique, UUID, d'un objet connecté, local ou distant, compris dans la liste de routage de la passerelle de connexion ; ou si,
- le domaine fonctionnel et le fabricant d'un objet connecté, compris dans les critères de recherche, sont identiques au domaine fonctionnel et au fabricant d'un objet connecté, local ou distant, compris dans la liste de routage de la passerelle de connexion et, le cas échéant, la distance maximale ciblée, dans l'infrastructure réseau, par rapport à l'objet connecté source comprise dans les critères de recherche est supérieure ou égale à la distance, dans l'infrastructure réseau, qui sépare un objet connecté distant de la première passerelle de connexion.

Enfin, l'étape 203 est exécutée dès lors qu'une correspondance est établie pour une objet connecté déterminé. Cet objet connecté est désigné comme objet connecté identifié dans le sens où il répond à tout ou partie des critères de recherche de la requête émis par l'objet connecté source. En particulier, l'étape 203 consiste à transmettre, à l'objet connecté source qui a émis la requête, des informations caractéristiques de l'objet connecté identifié. Ces informations caractéristiques sont celles dont dispose la passerelle de connexion qui a reçu la requête.

Ainsi, de manière non-limitative, les informations caractéristiques d'un objet connecté identifié peuvent comprendre une ou plusieurs des informations suivantes :
- l'identifiant universel unique, UUID, de l'objet connecté identifié ;
- le domaine fonctionnel de l'objet connecté identifié ;
- le fabricant de l'objet connecté identifié ;
- la distance, dans l'infrastructure réseau, qui sépare l'objet connecté identifié de l'objet connecté source ; et,
- la latence associée à une transmission de donnée de la passerelle de connexion à l'objet connecté identifié.

Avantageusement, ces informations caractéristiques permettent à l'objet connecté source de mettre à jour les informations dont il dispose dans la perspective d'échanger des messages avec un ou plusieurs autres objets connectés de l'infrastructure réseau.

Dans des modes de mise en oeuvre du procédé, les valeurs de distance utilisées (pour le paramètre de distance compris dans la liste de routage et pour le paramètre de distance ciblée compris dans les critères de recherche), c'est-à-dire la distance séparant une passerelle de connexion d'un objet connecté distant correspondent au nombre de passerelles de connexion qui sépare ladite passerelle d'une passerelle de connexion qui est directement connectée audit objet connecté. Par « directement connecté » on entend le fait d'être connecté sans aucun élément intermédiaire.

S'agissant de la liste de routage de la passerelle de connexion, l'homme du métier appréciera que celle-ci peut, par exemple, être générée et mise à jour régulièrement par ladite passerelle de connexion. En particulier, dans un mode de mise en oeuvre du procédé, les informations comprises dans une liste de routage d'une passerelle de connexion peuvent être stockées dans une mémoire de ladite passerelle de connexion et mises à jour à réception, par ladite passerelle de connexion, d'un message de réponse en provenance d'un objet connecté ou d'un message de maillage en provenance d'une autre passerelle de connexion de l'infrastructure réseau. Un message de réponse ou un message de maillage pouvant être émis, respectivement par un objet connecté ou par une passerelle de connexion en réponse à une requête reçue en provenance de la passerelle de connexion concernée. Avantageusement, chaque passerelle de connexion d'un réseau connecté peut ainsi requérir l'obtention d'informations actualisées sur toutes les autres entités de l'infrastructure réseau auxquelles elle a accès.

En outre, un message de réponse, reçu par une passerelle de connexion, en provenance d'un objet connecté déterminé de l'infrastructure réseau peut, par exemple, comprendre :
- l'identifiant universel unique, UUID, dudit objet connecté ;
- le domaine fonctionnel dudit objet connecté ;
- le fabricant dudit objet connecté ;
- la distance, dans l'infrastructure réseau, qui sépare ledit objet connecté de l'objet connecté source ; et,
- une liste d'identifiants universels uniques d'autres objets connectés du réseau d'objets connectés avec lesquels ledit objet connecté est susceptible de communiquer.

De plus, un message de maillage, reçu par une passerelle de connexion, en provenance d'une seconde passerelle de connexion déterminée de l'infrastructure réseau peut comprendre toutes les informations comprises dans la liste de routage de ladite seconde passerelle de connexion.

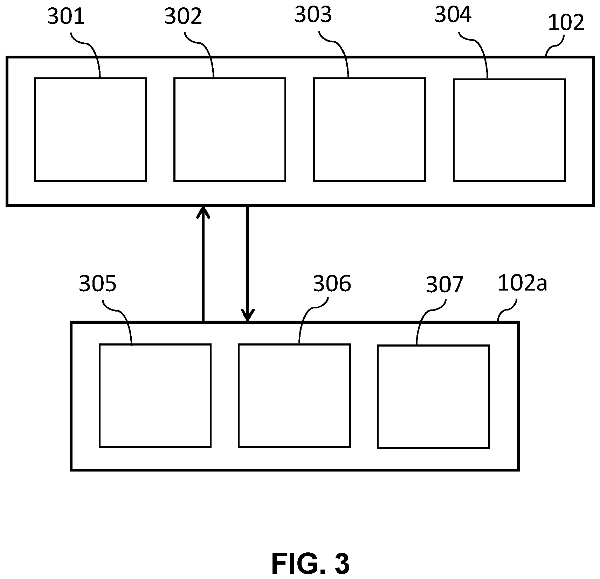

En référence à la **figure 3****,** il va maintenant être décrit un schéma fonctionnel illustrant un mode de réalisation d'une passerelle de connexion et un objet connecté selon un autre aspect de l'invention. La passerelle est particulièrement adaptée pour effectuer la mise en oeuvre du procédé qui a été décrit dans ce qui précède. Dans l'exemple représenté, la passerelle de connexion 102 comporte ainsi un module de réception 301, un module d'analyse 302 et un module d'identification 303. Les étapes du procédé exécutées par la passerelle de connexion impliquent une interaction de ladite passerelle de connexion avec l'objet connecté source 102a. En particulier, dans l'exemple représenté, l'objet connecté source 102a comporte un module d'émission 305 et un module de réception 306 qui permettent cette interaction. Chaque module (de la passerelle de connexion et de l'objet connecté source) comprend des moyens qui lui permettent d'opérer ses fonctions. Ces moyens peuvent être des combinaisons de processeurs, mémoire vive, mémoire morte, mémoire cache, ainsi que les codes (logiciels) supportant des instructions pour opérer ces éléments matériels.

Les rôles des différents modules de l'objet connecté source et de la passerelle de connexion qui interagissent sont décrits plus loin dans l'ordre chronologique de l'interaction associée à l'exécution des étapes du procédé par la passerelle de connexion.

Le module d'émission 305 de l'objet connecté source 102a est ainsi avantageusement configuré pour émettre une requête qui comprend des critères de recherche déterminés. Cette requête est destinée à la passerelle de connexion.

Le module de réception 301 de la passerelle de connexion 102 est donc configuré pour permettre à la passerelle de connexion 102 de recevoir des requêtes en provenance d'objets connectés source de l'infrastructure réseau. Ces requêtes comprennent des critères de recherche tels qu'ils ont été décrits plus haut.

Le module d'analyse 302 de la passerelle de connexion 102 est quant à lui configuré pour analyser la correspondance des critères de recherche de chaque requête avec des informations comprises dans la liste de routage de la passerelle de connexion. En particulier, le module d'analyse 302 vérifie que la correspondance soit établie entre au moins un critère de recherche et une information de la liste de routage de la passerelle de connexion avant que le module d'identification n'intervienne.

Le module d'identification 303 de la passerelle de connexion 102 est configuré pour transmettre à des objets connectés source, pour chaque objet connecté identifié, pour lequel une correspondance est établie, des informations caractéristiques de l'objet connecté identifié.

Finalement, le module de réception d'informations 306 de l'objet connecté source 102a est configuré pour recevoir des informations caractéristiques d'un ou de plusieurs objets connectés identifiés par la passerelle de connexion sur la base des critères de recherche.

En outre, les critères de recherche reçues par la passerelle de connexion et sa liste de routage peuvent être mémorisée par un module de mémorisation 304 de la passerelle de connexion. De même les informations reçues de la passerelle de connexion par le module de réception d'informations de l'objet connecté source peuvent être mémorisée pour un module de mémorisation 307. Pour cela, chaque module de mémorisation peut comprendre n'importe quel support lisible connu dans l'art comprenant, par exemple, une mémoire volatile, telle qu'une mémoire vive statique (SRAM) et une mémoire vive dynamique (DRAM), et/ou une mémoire non volatile, telle que mémoire morte, mémoires flash, disques durs, disques optiques et bandes magnétiques ou sous la forme d'une mémoire volatile, telle qu'une mémoire vive (RAM) et/ou une mémoire cache.

La présente invention a été décrite et illustrée dans la présente description détaillée et dans les figures des dessins annexés, dans des formes de réalisation possibles. La présente invention ne se limite pas, toutefois, aux formes de réalisation présentées. D'autres variantes et modes de réalisation peuvent être déduits et mis en oeuvre par la personne du métier à la lecture de la présente description et des dessins annexés.

Comme cela a été décrit dans ce qui précède, la présente invention propose des solutions permettant l'identification d'un ou de plusieurs objets connectés sur la base de critères de recherche spécifiques. Une passerelle de connexion d'un réseau d'objet connecté est ainsi en mesure de transmettre à un objet connecté source des informations caractéristiques d'autres objets connectés de la même infrastructure réseau avec lesquels il est susceptible d'échanger des messages. En outre, l'identification peut être opérée par l'analyse de correspondances des critères de recherche avec des informations comprises dans une liste de routage de la passerelle qui peut être mise à jour régulièrement. Enfin, le procédé s'applique dans une infrastructure réseau composée de plusieurs réseaux d'objets connectés interconnectés par l'intermédiaire d'un réseau de transport de données et dans laquelle les différentes passerelles de connexion des différents réseaux utilisent des interfaces de communication différentes.

## Revendications

1. Procédé d'identification d'un objet connecté dans une infrastructure réseau (109), ladite infrastructure réseau comportant au moins deux réseaux d'objets connectés (101, 107) qui sont interconnectés par l'intermédiaire d'un réseau de transport de données (104), lesdits réseaux d'objets connectés comprenant chacun une pluralité de passerelles de connexion (101, 102, 108) au réseau de transport de données supportant des interfaces de communication respectives, ledit procédé comprenant les étapes suivantes, exécutées par une première passerelle de connexion de l'un des réseaux d'objets connectés :
- réception (201) d'une requête en provenance d'un objet connecté source de l'infrastructure réseau, ladite requête comprenant des critères de recherche déterminés ; lesdits critères de recherche comprennent :
▪une distance maximale ciblée, dans l'infrastructure réseau, par rapport à l'objet connecté source ;
- analyse (202) de la correspondance des critères de recherche de la requête avec des informations relatives à des objets connectés de l'infrastructure réseau qui sont comprises dans une liste de routage de la passerelle de connexion ; lesdites informations relatives à des objets connectés comprennent :
▪des distances respectives, dans l'infrastructure réseau, séparant la passerelle de connexion d'objets connectés locaux ou distants auxquels ladite passerelle de connexion peut transmettre des messages ;
et, en cas d'identification d'un ou plusieurs autres objets connectés pour lequel une correspondance est établie,
- transmission (203), à l'objet connecté source, d'informations caractéristiques de l'un ou plusieurs autres objets connectés identifiés.

2. Procédé selon la revendication précédente, **caractérisé en ce que** les critères de recherche comprennent en outre un ou plusieurs des critères suivants :
- un identifiant universel unique, UUID, d'un objet connecté ;
- une donnée d'identification du domaine fonctionnel d'un objet connecté ; et
- une donnée d'identifiant d'un fabricant d'un objet connecté ;
et **en ce que** les informations relatives à des objets connectés comprennent en outre une ou plusieurs des informations suivantes :
- des identifiants universels uniques, UUID, d'objets connectés locaux ou distants, auxquels la passerelle de connexion peut transmettre des messages ;
- des données d'identification de domaines fonctionnels respectifs, d'objets connectés locaux ou distants, auxquels la passerelle de connexion peut transmettre des messages ; et
- des données d'identification de fabricants respectifs, d'objets connectés locaux ou distants, auxquels la passerelle de connexion peut transmettre des messages.

3. Procédé selon l'une quelconque des revendications précédentes, **caractérisé en ce que** ledit procédé s'applique dans des réseaux interconnectés d'objets connectés qui comprennent plusieurs passerelles de connexions utilisant différentes interfaces de communication.

4. Procédé selon l'une quelconque des revendications précédentes, dans lequel une valeur de la distance séparant une passerelle de connexion d'un objet connecté distant est déterminée par le nombre de passerelles de connexion séparant ladite passerelle d'une passerelle de connexion directement connectée audit objet connecté.

5. Procédé selon l'une quelconque des revendications précédentes, dans lequel un objet connecté est désigné comme objet connecté identifié lorsqu'il répond à tout ou partie des critères de recherche de la requête émis par l'objet connecté source.

6. Procédé selon l'une quelconque des revendications précédentes, dans lequel une correspondance des critères de recherche de la requête est établie avec des informations relatives à un objet connecté déterminé, local ou distant, de l'infrastructure réseau lorsque :
- un identifiant universel unique, UUID, d'un objet connecté compris dans les critères de recherche est identique à un identifiant universel unique, UUID, de l'objet connecté compris dans la liste de routage de la passerelle de connexion ;
ou lorsque,
- une donnée d'identification du domaine fonctionnel et une donnée d'identification du fabricant d'un objet connecté, compris dans les critères de recherche de la requête, sont identiques respectivement, au domaine fonctionnel et au fabricant de l'objet connecté, qui sont compris dans la liste de routage de la passerelle de connexion et, le cas échéant,
- la distance maximale ciblée, dans l'infrastructure réseau, par rapport à l'objet connecté source comprise dans les critères de recherche est supérieure ou égale à la distance, dans l'infrastructure réseau, qui sépare l'objet connecté de la première passerelle de connexion.

7. Procédé selon l'une quelconque des revendications précédentes, dans lequel les informations caractéristiques d'un objet connecté identifié comprennent une ou plusieurs des informations suivantes :
- l'identifiant universel unique, UUID, de l'objet connecté identifié ;
- le domaine fonctionnel de l'objet connecté identifié ;
- le fabricant de l'objet connecté identifié ;
- la distance, dans l'infrastructure réseau, qui sépare l'objet connecté identifié de l'objet connecté source ; et
- la latence associée à une transmission de donnée depuis la passerelle de connexion jusqu'à l'objet connecté identifié.

8. Procédé selon l'une quelconque des revendications précédentes, dans lequel les informations comprises dans une liste de routage d'une passerelle de connexion sont stockées dans une mémoire de ladite passerelle de connexion et sont mises à jour à réception, par ladite passerelle de connexion, d'un message de réponse en provenance d'un objet connecté ou d'un message de maillage en provenance d'une autre passerelle de connexion de l'infrastructure réseau.

9. Procédé selon la revendication précédente, dans lequel un message de réponse reçu par une passerelle de connexion en provenance d'un objet connecté déterminé de l'infrastructure réseau comprend :
- un identifiant universel unique, UUID, dudit objet connecté ;
- une donnée d'identification du domaine fonctionnel dudit objet connecté ;
- unr donnée d'identification du fabricant dudit objet connecté ;
- la distance, dans l'infrastructure réseau, qui sépare ledit objet connecté de l'objet connecté source ; et
- une liste d'identifiants universels uniques d'autres objets connectés du réseau d'objets connectés avec lesquels ledit objet connecté possède une liaison de communication établie ainsi que le domaine fonctionnel, le fabricant et la distance associés auxdits autres objets connectés.

10. Procédé selon la revendication précédente, dans lequel un message de maillage, reçu par une passerelle de connexion, en provenance d'une seconde passerelle de connexion déterminée de l'infrastructure réseau comprend les informations comprises dans la liste de routage de ladite seconde passerelle de connexion.

11. Procédé selon l'une quelconque des revendications précédentes, dans lequel les interfaces de communication utilisées par les passerelles de connexion comprennent des interfaces Ethernet, des interfaces WIFI, des interfaces Bluetooth, des interfaces RF433 ou des interfaces IrDA.

12. Passerelle de connexion d'un réseau d'objets connectés configurée pour la mise en oeuvre du procédé selon l'une quelconque des revendications précédentes, ledit réseau d'objets connectés étant interconnecté à un autre réseau d'objets connectés par l'intermédiaire d'au moins un réseau de transport de données au sein d'une infrastructure réseau et comprenant des passerelles de connexion supportant des interfaces de communication respectives, ladite passerelle de connexion étant **caractérisée en ce qu'**elle comporte :
- un module de réception (301) configuré pour recevoir des requêtes en provenance d'objets connectés source de l'infrastructure réseau, lesdites requêtes comprenant des critères de recherche déterminés ;
- un module d'analyse (302) configuré pour analyser la correspondance des critères de recherche de chaque requête avec des informations relatives à des objets connectés de l'infrastructure réseau qui sont comprises dans une liste de routage de la passerelle de connexion ; et
- un module d'identification (303) configuré pour transmettre à des objets connectés source, pour chaque objet connecté identifié pour lequel une correspondance est établie, des informations caractéristiques de l'objet connecté identifié.

13. Système de communication de données comprenant au moins deux réseaux d'objets connectés interconnectés par l'intermédiaire d'un réseau de transport de données au sein d'une infrastructure réseau, lesdits réseaux d'objets connectés comprenant une pluralité de passerelles de connexion selon la revendication précédente.

14. Objet connecté d'un réseau d'objets connectés, ledit réseau d'objets connectés étant interconnectés à au moins un second réseau d'objets connectés par l'intermédiaire d'un réseau de transport de données au sein d'une infrastructure réseau et comprenant des passerelles de connexion supportant des interfaces de communication respectives, ledit objet connecté étant connecté à une passerelle de connexion configurée pour la mise en oeuvre du procédé selon l'une quelconque des revendications 1 à 11 et étant **caractérisé en ce qu'**il comporte :
- un module d'émission de requête (305) configuré pour émettre une requête comprenant des critères de recherche déterminés ; et
- un module de réception d'informations (306) configuré pour recevoir des informations caractéristiques d'objets connectés identifiés.

## Patentansprüche

1. Verfahren zum Identifizieren eines verbundenen Objekts in einer Netzwerkinfrastruktur (109), wobei die Netzwerkinfrastruktur mindestens zwei Netzwerke verbundener Objekte (101, 107), die über ein Datentransportnetzwerk (104) vernetzt sind, aufweist, wobei die Netzwerke verbundener Objekte jeweils eine Vielzahl von Gateways (101, 102, 108) zum Verbinden mit dem Datentransportnetzwerk, die jeweilige Kommunikationsschnittstellen unterstützen, umfassen, wobei das Verfahren die folgenden Schritte, die durch ein erstes Gateway zum Verbinden eines der Netzwerke verbundener Objekte ausgeführt werden, umfasst:
- Empfangen (201) einer Anfrage von einem verbundenen Quellobjekt der Netzwerkinfrastruktur, die Anfrage umfassend bestimmte Suchkriterien; die Suchkriterien umfassend:
▪ eine maximale Zielentfernung in der Netzwerkinfrastruktur relativ zu dem verbundenen Quellobjekt;
- Analysieren (202) der Übereinstimmung der Suchkriterien der Anfrage mit Informationen bezüglich verbundener Objekte der Netzwerkinfrastruktur, die in einer Routing-Liste des Verbindungs-Gateways enthalten sind; die Informationen bezüglich verbundener Objekte umfassend:
▪ jeweilige Entfernungen in der Netzwerkinfrastruktur, die das Verbindungs-Gateway von lokalen oder entfernten verbundenen Objekten, an die das Verbindungs-Gateway Nachrichten übermitteln kann, trennen;
und, im Falle einer Identifizierung eines oder mehrerer anderer verbundener Objekte, für die eine Übereinstimmung festgestellt wird,
- Übermitteln (203) von Informationen, die für das eine oder die mehreren identifizierten anderen verbundenen Objekte charakteristisch sind, an das verbundene Quellobjekt.

2. Verfahren nach dem vorstehenden Anspruch,
**dadurch gekennzeichnet, dass** die Suchkriterien ferner eines oder mehrere der folgenden Kriterien umfassen:
- eine eindeutige universelle Kennung, UUID, eines verbundenen Objekts;
- ein Identifikationsdatum des Funktionsbereichs eines verbundenen Objekts; und
- ein Identifikationsdatum eines Erzeugers eines verbundenen Objekts;
und **dass** die Informationen bezüglich verbundener Objekte ferner eine oder mehrere der folgenden Informationen umfassen:
- eindeutige universelle Kennungen, UUID, von lokalen oder entfernten verbundenen Objekten, an die das Verbindungs-Gateway Nachrichten übermitteln kann;
- Identifikationsdaten der jeweiligen Funktionsbereiche lokaler oder entfernter verbundener Objekte, an die das Verbindungs-Gateway Nachrichten übermitteln kann; und
- Identifikationsdaten der jeweiligen Erzeuger von lokalen oder entfernten verbundenen Objekten, an die das Verbindungs-Gateway Nachrichten senden kann.

3. Verfahren nach einem der vorstehenden Ansprüche,
**dadurch gekennzeichnet, dass** das Verfahren für vernetzte Netzwerke von verbundenen Objekten gilt, die mehrere Verbindungs-Gateways umfassen, die unterschiedliche Kommunikationsschnittstellen verwenden.

4. Verfahren nach einem der vorstehenden Ansprüche, wobei ein Wert für die Entfernung, die ein Verbindungs-Gateway von einem entfernten verbundenen Objekt trennt, durch die Anzahl der Verbindungs-Gateways bestimmt wird, die das Gateway von einem Verbindungs-Gateway trennen, das direkt mit dem verbundenen Objekt verbunden ist.

5. Verfahren nach einem der vorstehenden Ansprüche, wobei ein verbundenes Objekt als identifiziertes verbundenes Objekt bezeichnet wird, wenn es alle oder ein Teil der Suchkriterien der Anfrage erfüllt, die durch das verbundene Quellobjekt ausgegeben wurden.

6. Verfahren nach einem der vorstehenden Ansprüche, wobei eine Übereinstimmung der Suchkriterien der Anfrage mit Informationen über ein bestimmtes lokales oder entferntes verbundenes Objekt der Netzwerkinfrastruktur festgestellt wird, wenn:
- eine eindeutige universelle Kennung, UUID, eines in den Suchkriterien enthaltenen verbundenen Objekts mit einer eindeutigen universellen Kennung, UUID, des in der Routing-Liste des Verbindungs-Gateways enthaltenen verbundenen Objekts identisch ist;
oder wenn
- ein Identifikationsdatum des Funktionsbereichs und ein Identifikationsdatum des Erzeugers eines verbundenen Objekts, die in den Suchkriterien der Anfrage enthalten sind, mit dem Funktionsbereich beziehungsweise dem Erzeuger des verbundenen Objekts identisch sind, die in der Routing-Liste des Verbindungs-Gateways enthalten sind, und, gegebenenfalls,
- die maximale Zielentfernung in der Netzwerkinfrastruktur relativ zu dem in den Suchkriterien enthaltenen verbundenen Quellobjekt größer als oder gleich der Entfernung in der Netzwerkinfrastruktur ist, die das verbundene Objekt von dem ersten Verbindungs-Gateway trennt.

7. Verfahren nach einem der vorstehenden Ansprüche, wobei die Informationen, die für ein identifiziertes verbundenes Objekt charakteristisch sind, eine oder mehrere der folgenden Informationen umfassen:
- die eindeutige universelle Kennung, UUID, des identifizierten verbundenen Objekts;
- den Funktionsbereich des identifizierten verbundenen Objekts;
- den Erzeuger des identifizierten verbundenen Objekts;
- die Entfernung in der Netzwerkinfrastruktur, die das identifizierte verbundene Objekt von dem verbundenen Quellobjekt trennt; und
- die Latenz, die einer Datenübertragung von dem Verbindungs-Gateway an das identifizierte verbundene Objekt zugeordnet ist.

8. Verfahren nach einem der vorstehenden Ansprüche, wobei die in einer Routing-Liste eines Verbindungs-Gateways enthaltenen Informationen in einem Speicher des Verbindungs-Gateways gespeichert werden und bei Empfang einer Antwortnachricht von einem verbundenen Objekt oder einer Netznachricht von einem anderen Verbindungs-Gateway der Netzwerkinfrastruktur durch das Verbindungs-Gateway aktualisiert werden.

9. Verfahren nach dem vorstehenden Anspruch, wobei eine durch ein Verbindungs-Gateway empfangene Antwortnachricht von einem bestimmten verbundenen Objekt der Netzwerkinfrastruktur umfasst:
- eine eindeutige universelle Kennung, UUID, des verbundenen Objekts;
- ein Identifikationsdatum des Funktionsbereichs des verbundenen Objekts;
- ein Identifikationsdatum des Erzeugers des verbundenen Objekts;
- die Entfernung in der Netzwerkinfrastruktur, die das verbundene Objekt von dem verbundenen Quellobjekt trennt; und
- eine Liste eindeutiger universeller Kennungen anderer verbundener Objekte des Netzwerks verbundener Objekte, mit denen das verbundene Objekt eine festgestellte Kommunikationsverbindung besitzt, sowie den Funktionsbereich, den Erzeuger und die Entfernung, die den anderen verbundenen Objekten zugeordnet sind.

10. Verfahren nach dem vorstehenden Anspruch, wobei eine durch ein Verbindungs-Gateway empfangene Netznachricht von einem bestimmten zweiten Verbindungs-Gateway der Netzwerkinfrastruktur die in der Routing-Liste des zweiten Verbindungs-Gateways enthaltenen Informationen umfasst.

11. Verfahren nach einem der vorstehenden Ansprüche, wobei die durch die Verbindungs-Gateways verwendeten Kommunikationsschnittstellen Ethernet-Schnittstellen, WLAN-Schnittstellen, Bluetooth-Schnittstellen, RF433-Schnittstellen oder IrDA-Schnittstellen umfassen.

12. Verbindungs-Gateway eines Netzwerks verbundener Objekte, das für die Durchführung des Verfahrens nach einem der vorstehenden Ansprüche konfiguriert ist, wobei das Netzwerk verbundener Objekte mit einem anderen Netzwerk verbundener Objekte über mindestens ein Datentransportnetzwerk in einer Netzwerkinfrastruktur vernetzt ist und Verbindungs-Gateways umfasst, die jeweilige Kommunikationsschnittstellen unterstützen, wobei das Verbindungs-Gateway **dadurch gekennzeichnet ist, dass** es aufweist:
- ein Empfangsmodul (301), das konfiguriert ist, um Anfragen von verbundenen Quellobjekten der Netzwerkinfrastruktur zu empfangen, die Anfragen umfassend bestimmte Suchkriterien;
- ein Analysemodul (302), das konfiguriert ist, um die Übereinstimmung der Suchkriterien jeder Anfrage mit Informationen bezüglich verbundener Objekte der Netzwerkinfrastruktur, die in einer Routing-Liste des Verbindungs-Gateways enthalten sind, zu analysieren; und
- ein Identifikationsmodul (303), das konfiguriert ist, um für jedes identifizierte verbundene Objekt, für das eine Übereinstimmung festgestellt wird, Informationen, die für das identifizierte verbundene Objekt charakteristisch sind, an verbundene Quellobjekte zu übermitteln.

13. Datenkommunikationssystem, umfassend mindestens zwei Netzwerke verbundener Objekte, die über ein Datentransportnetzwerk in einer Netzwerkinfrastruktur vernetzt sind, die Netzwerke verbundener Objekte umfassend eine Vielzahl von Verbindungs-Gateways nach dem vorstehenden Anspruch.

14. Verbundenes Objekt eines Netzwerks verbundener Objekte, wobei das Netzwerk verbundener Objekte mit mindestens einem zweiten Netzwerk verbundener Objekte über ein Datentransportnetz in einer Netzwerkinfrastruktur vernetzt ist und Verbindungs-Gateways umfasst, die jeweilige Kommunikationsschnittstellen unterstützen, wobei das verbundene Objekt mit einem Verbindungs-Gateway verbunden ist, das für die Durchführung des Verfahrens nach einem der Ansprüche 1 bis 11 konfiguriert ist, und **dadurch gekennzeichnet ist, dass** es aufweist:
- ein Anfragesendemodul (305), das konfiguriert ist, um eine Anfrage, die bestimmte Suchkriterien umfasst, zu senden; und
- ein Informationsempfangsmodul (306), das konfiguriert ist, um Informationen, die für identifizierte verbundene Objekte charakteristisch sind, zu empfangen.

## Claims

1. Method for the identification of a connected object in a network infrastructure (109), said network infrastructure comprising at least two networks of connected objects (101, 107) that are interconnected by means of a data transport network (104), said networks of connected objects each comprising a plurality of connection gateways (101, 102, 108) to the data transport network supporting respective communication interfaces, said method comprising the following steps, executed by a first connection gateway of one of the networks of connected objects:
- reception (201) of a request coming from a source connected object of the network infrastructure, said request comprising specific search criteria, said search criteria comprise:
• a maximum target distance, in the network infrastructure, in relation to the source connected object;
- analysis (202) of the correspondence of the search criteria of the request with information related to connected objects of the network infrastructure which are comprised in a routing list for the connection gateway, said information related to connected objects comprise
• respective distances, in the network infrastructure, separating the connection gateway of local or remote connected objects, to which said connection gateway can transmit messages;
and, in the case of identification of one or more other connected objects for which a correspondence has been established,
- transmission (203), to the source connected object, of information characteristic of one or more other identified connected objects.

2. Method according to the preceding claim, **characterized in that** the search criteria further comprise one or more of the following criteria:
- a unique universal identifier, UUID, for a connected object;
- an identification data of the functional domain of a connected object; and
- an identification data of a manufacturer of a connected object,
and **in that** the information related to the connected objects comprise one or more of the following pieces of information:
- unique universal identifiers, UUID, for local or remote connected objects, to which the connection gateway can transmit messages;
- identification data of respective functional domains, for local or remote connected objects, to which the connection gateway can transmit messages; and
- identification data of respective manufacturers, of local or remote connected objects, to which the connection gateway can transmit messages.

3. Method according to any one of the preceding claims, **characterized in that** said method is performed in interconnected networks of connected objects which comprise several connection gateways using different communication interfaces.

4. Method according to any one of the preceding claims, wherein a value of the distance separating a connection gateway from a remote connected object is determined by the number of connection gateways separating said gateway from a connection gateway directly connected to said connected object.

5. Method according to any one of the preceding claims, wherein a connected object is designated as an identified connected object when it matches each or part of the search criteria of the request coming from the source connected object.

6. Method according to any one of the preceding claims, wherein a correspondence of the search criteria of the request is established with information relating to a specific connected object, either local or remote, of the network infrastructure when:
- a unique universal identifier, UUID, for a connected object comprised in the search criteria is identical to a unique universal identifier, UUID, for the connected object included in the routing list of the connection gateway;
or when,
- an identification data of the functional domain and an identification data of the manufacturer of a connected object, comprised in the request search criteria, are identical respectively, to the functional domain and to the manufacturer of the connected object, which are included in the routing list of the connection gateway and, if applicable,
- the maximum target distance, in the network infrastructure, in relation to the source connected object comprised in the search criteria is greater than or equal to the distance, in the network infrastructure, which separates the connected object from the first connection gateway.

7. Method according to any one of the preceding claims, wherein the information characteristic of an identified connected object comprises one or more of the following pieces of information:
- the universal unique identifier, UUID, of the identified connected object;
- the functional domain of the identified connected object;
- the manufacturer of the identified connected object;
- the distance, in the network infrastructure, that separates the identified connected object from the source connected object; and
- the latency associated with a data transmission from the connection gateway to the identified connected object.

8. Method according to any one of the preceding claims, wherein the information included in a routing list of a connection gateway is stored in a memory of said connection gateway and is updated upon reception, by said connection gateway, of a response message coming from a connected object or a mesh message coming from another connection gateway of the network infrastructure.

9. Method according to the preceding claim, wherein a response message received by a connection gateway coming from a specific connected object of the infrastructure comprises:
- a universal unique identifier, UUID, of said connected object;
- an identification data of the functional domain of said connected object;
- an identification data of the manufacturer of said connected object;
- the distance, in the network infrastructure, that separates said connected object from the source connected object; and
- a list of unique universal identifiers of other connected objects of the network of connected objects with which said connected object has an established communications link, as well as the functional domain, the manufacturer and the distance associated with said other connected objects.

10. Method according to the preceding claim, wherein a mesh message, received by a connection gateway, coming from a specific second connection gateway of the network infrastructure comprises the information included in the routing list of said second connection gateway.

11. Method according to any one of the preceding claims, wherein the communication interfaces used by the connection gateways comprise Ethernet interfaces, WIFI interfaces, Bluetooth interfaces, RF433 interfaces, or IrDA interfaces.

12. A connection gateway of a network of connected objects configured for the implementation of the method according to any of the preceding claims, said network of connected objects being interconnected with another network of connected objects by means of at least one data transport network within a network infrastructure and comprising connection gateways supporting respective communication interfaces, said connection gateway being **characterized in that** it comprises:
- a receiving module (301) configured to receive requests from source connected objects of the network infrastructure, said requests comprising specific search criteria;
- an analysis module (302) configured to analyze the correspondence of the search criteria of each request with information related to connected objects of the network infrastructure which are included in a routing list for the connection gateway; and
- an identification module (303) configured to transmit to source connected objects, for each identified connected object for which a correspondence is established, information characteristic of the identified connected object.

13. A data communication system comprising at least two networks of connected objects that are interconnected by means of a data transport network within a network infrastructure, said networks of connected objects comprising a plurality of connection gateways according to the preceding claim.

14. A connected object of a network of connected objects, said network of connected objects being interconnected with at least one second network of connected objects by means of a data transport network within a network infrastructure and comprising connection gateways supporting respective communication interfaces, said connected object being connected to a connection gateway configured for the implementation of the method according to any of claims 1 to 11 and being **characterized in that** it comprises:
- a request transmitting module (305) configured to issue a request comprising specific search criteria; and
- an information receiving module (306) configured to receive information characteristic of identified connected objects.
